# EUROPÄISCHE PATENTSCHRIFT

(11) **EP 0 978 182 B1**
(45) Veröffentlichungstag und Bekanntmachung des Hinweises auf die Patenterteilung: **12.11.2003**
(21) Anmeldenummer: 98928083.9
(22) Anmeldetag: 27.03.1998
(51) Int. Cl.: H04L 25/06

(54) **VERFAHREN UND ANORDNUNG ZUR REGELUNG DER ENTSCHEIDERSCHWELLE UND DES ABTASTZEITPUNKTES EINES DATENREGENERATORS**
METHOD AND DEVICE FOR REGULATING THE DECISION THRESHOLD AND SAMPLING POINT OF A DATA REGENERATOR
PROCEDE ET DISPOSITIF POUR REGLER LE SEUIL DE DECISION ET L'INSTANT D'ECHANTILLONNAGE D'UN REGENERATEUR DE DONNEES

(30) Priorität: 25.04.1997 DE 19717643
(43) Veröffentlichungstag der Anmeldung: 09.02.2000
(73) Patentinhaber: SIEMENS AKTIENGESELLSCHAFT, 80333 München (DE)
(72) Erfinder: MÜLLNER, Ernst, D-80995 München (DE); HOFSCHEN, Stefan, D-82541 Münsing (DE)
(86) Internationale Anmeldenummer: DE9800893
(87) Internationale Veröffentlichungsnummer: WO98049811

(56) Entgegenhaltungen:
- EP-A- 0 328 266
- EP-A- 0 455 910
- EP-A- 0 716 523
- EP-A- 0 744 848
- HOGGE C R: "A SELF CORRECTING CLOCK RECOVERY CIRCUIT" JOURNAL OF LIGHTWAVE TECHNOLOGY, Bd. LT-3, Nr. 6, 1. Dezember 1985, Seiten 1312-1314, XP000560659 in der Anmeldung erwähnt
- MUELLNER E: "A20 GBIT/S PARALLEL PHASE DETECTOR AND DEMULTIPLEXER CIRCUIT IN A PRODUCTION SILICON BIPOLAR TECHNOLOGY WITH FTAU=25 GHZ" PROCEEDINGS OF THE 1996 BIPOLAR/BICMOS CIRCUITS AND TECHNOLOGY MEET, MINNEAPOLIS, SEPT. 29 - OCT. 1, 1996, 29. September 1996, Seiten 43-45, XP000697153 INSTITUTE OF ELECTRICAL AND ELECTRONICS ENGINEERS

## Beschreibung

Die Erfindung betrifft ein Verfahren nach dem Oberbegriff des Patentanspruchs 1.

Aus IEEE, Journal of Lightwave Technology, Volume Lt-3, No 6, Seite 1312-1314 ist ein Phasendetektor bekannt, der ein Regelsignal für einen steuerbaren Ozillator liefert. Für extrem hohe Frequenzen über 10 Gigahertz werden zustandsgesteuerte Speicherstufen zum Aufbau des Phasendetektors verwendet. Ein solcher Phasendetektor ist in der europäischen Patentanmeldung EP 716 523 A1 beschrieben. Um eine optimale Abtastung und niedrige Bitfehlerraten zu gewährleisten, müssen sowohl die Entscheiderschwelle für das Empfangssignal als auch der Abtastzeitpunkt eingestellt werden.

Wegen der unvermeidlichen Änderungen des Senders, der Übertragungsstrecke und des Empfängers reicht eine einmalige Einstellung nicht aus. Es kann nun daran gedacht werden, den Abtastzeitpunkt zu variieren und gleichzeitig die dann auftretende Bitfehlerrate zu messen. Der richtige Abtastzeitpunkt ist dann eingestellt, wenn die Bitfehlerrate ihr Minimum erreicht. Entsprechend kann die optimal Entscheiderschwelle eingestellt werden.

Nachteilig wäre jedoch bei einem solchen Verfahren, daß durch das Verstellen des Abtastzeitpunktes und der Entscheiderschwelle erhöhte Bitfehlerraten auftreten. Ein solches Verfahren wäre zumindest während des Betriebes nicht anwendbar.

Aus der Anmeldung E 0 328 266 A3 ist ein Datenregenerator mit drei Datenpfaden bekannt, die unterschiedliche Schwellwerte aufweisen, wobei der mittlere Schwellwert durch die beiden anderen festgelegt wird. Der Datenregenerator gestattet sowohl eine Optimierung der Abtastschwelle als auch des Abtastzeitpunktes. Aber auch hier erfolgt eine Änderung der Entscheiderschwelle im Arbeits-Datenpfad bei einer Änderung der anderen Entscheiderschwellen.

Aufgabe der Erfindung ist es daher, ein Verfahren zur optimalen Einstellung der Entscheiderschwelle und des Abtastzeitpunktes anzugeben, das auch während der Übertragung von Daten durchgeführt werden kann. Außerdem ist eine geeignete Anordnung zu realisieren.

Diese Aufgabe wird durch ein Verfahren nach Anspruch 1 gelöst. Eine geeignete Anordnung ist in einem unabhängigen Anspruch anzugeben.

Durch die Verwendung eines zweiten Datenpfades und zweier unabhängig voneinander einstellbarer Entscheiderschwellen ist das Verfahren besonders deshalb vorteilhaft, weil in dem zusätzlichen Datenpfad die Entscheiderschwelle zum Auffinden des Optimums soweit verstellt werden kann, bis durch die schlechte Abtastung bedingte Fehler auftreten, ohne daß hiervon die weiterzuverarbeitenden Daten betroffen werden.

Vorteilhaft ist, daß jedoch der Abtastzeitpunkt für beide Datenpfade gemeinsam geregelt wird. Hierdurch ist der Aufwand wesentlich geringer und es ist dafür gesorgt, daß automatisch auch im Nutzdatenpfad die optimale Abtastung erfolgt.

Die Erfindung wird anhand eines Ausführungsbeispiels näher erläutert.
- Figur 1: zeigt eine erfindungsgemäße Anordnung und
- Figur 2: ein Augendiagramm zur Erläuterung der Funktionsweise.

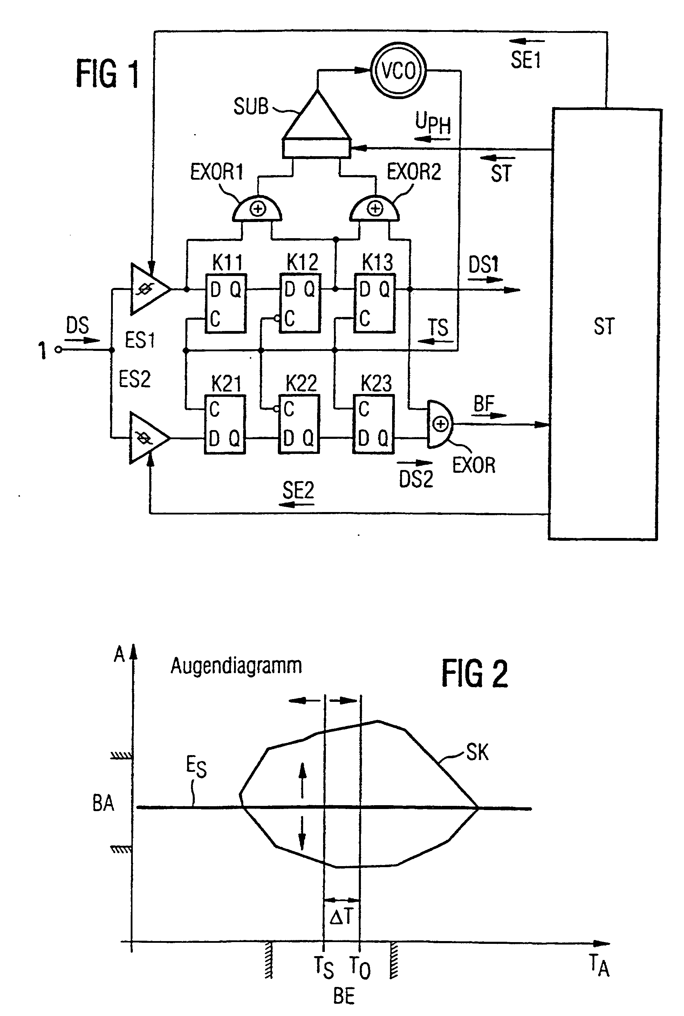

Die in **Figur 1** dargestellte Anordnung weist einen ersten Datenpfad mit einer Entscheiderstufe ES1 und drei Speicherzellen K11, K12 und K13 auf, die einen ersten Datenpfad bilden und deren Ausgangssignale zur Gewinnung eines Regelsignals und eines Referenzsignals mit den Eingängen zweier Exclusive-Oder-Gatter EXOR1 und EXOR2 verbunden sind. Deren Ausgänge sind über einen Subtrahierer SUB verbunden, dessen Ausgangssignal einen Oszillator VCO steuert. Die Art des Phasendetektors und der Phasenregelschleife ist für die Erfindung unwesentlich. Details (beispielsweise ein Filter) wurden aus Gründen der Übersichtlichkeit nicht dargestellt.

Der Oszillator erzeugt ein Taktsignal TS, das sowohl die Speicherstufen des ersten Datenpfades als auch die Speicherstufen K21, K22 und K23 des zweiten Datenpfades triggert. Der zweite Datenpfad enthält eine zweite Entscheiderstufe ES2. Die Eingänge beider Entscheiderstufen sind zu einem Dateneingang 1 zusammengefaßt, dem das empfangene Datensignal DS - beispielsweise nach der Umwandlung eines optischen Signals in ein elektrisches Signal - zugeführt wird. Die Ausgänge beider Datenpfade sind über ein weiteres Exclusive-Oder-Gatter EXOR zusammengefaßt, dessen Ausgang mit einem Dateneingang einer Steuerung ST verbunden ist. Diese kann die Entscheidungsschwellen beider Entscheiderstufen ES1 und ES2 verändern und den Abtastzeitpunkt variieren, indem sie - in diesem Ausführungsbeispiel - zu der gewonnen Regelspannung eine Steuerspannung U_{PH} addiert. Eine andere Möglichkeit wäre der Einsatz eines steuerbaren Zeitgliedes.

Es wird davon ausgegangen, daß zunächst beide Entscheidungsschwellen auf einen Standardwert Eₛ. eingestellt sind und ebenso der sich mit der Datentaktrate wiederholende Abtastzeitpunkt T_{A} auf einen Standardwert Tₛ (**Figur 2**) eingestellt ist. Durch die Steuerung wird zunächst versuchsweise die Entscheiderschwelle (Amlitude A) der zweiten Entscheidestufe ES2 geändert, beispielsweise vergrößert. Zunächst treten Bitfehler BF am Ausgang des die Ausgangssignale beider Datenpfade vergleichenden weiteren Exklusiv-Oder-Gatters EXOR auf. Die Entscheiderschwelle wird weiter vergrößert bis ein vorgegebener Grenzwert der Fehlerrate erreicht ist, der als Grenzbitfehlerratenkurve SK in **Figur 2** dargestellt ist. Nach dem Erreichen der Grenzfehrerratenkurve wird eine Veränderung der Entscheidungsschwelle in der entgegengesetzten Richtung, hier eine Verkleinerung der Entscheiderschwelle, durchgeführt, bis dieselbe Grenzfehlerrate , d.h. die Grenzfehrerratenkurve SK, erneut erreicht ist. Das Mittel aus dem oberen und dem unteren Grenzschwellwert ergibt die neue Sollage der Entscheiderschwelle, die auch für die Entscheiderstufe des ersten Datenpfads eingestellt wird. Es ist auch möglich die Entscheiderschwelle jeweils nur um einen vorher festgelegten maximalen Betrag zu ändern.

Nach der Korrektur der Entscheiderschwelle wird der Abtastzeitpunkt Tₛ versuchsweise in einer beliebigen Richtung um jeweils eine Zeitdifferenz ΔT verschoben, bei der noch keine Fehler oder nur wenige Fehler auftreten. Dann erfolgt wiederum eine Veränderung der Entscheiderschwelle in beide Richtungen bis jeweils die Grenzbitfehlerrate erreicht ist. Ist die Differenz der zugehörigen Grenzschwellenwerte größer als die vorhergehende Differenz, dann erfolgte die Verschiebung in der korrekten Richtung und der neue Abtastzeitpunkt Tₒ (hier bereits der optimale Abtastzeitpunkt) bleibt vorläufig als Sollzeitpunkt eingestellt. Für diesen Abtastzeitpunkt kann auch die Entscheiderschwelle der ersten Entscheiderstufe sofort korrigiert werden.

Ist dagegen die Differenz zwischen dem oberen und der unteren Grenzschwellenwert geringer geworden, dann war der Standardabtastzeitpunkt bzw. der vorhergehende Abtastzeitpunkt der bessere. Von diesem ausgehend wird dann der Abtastzeitpunkt in der entgegengesetzten Richtung verschoben, um dann wieder die zweite Entscheiderschwelle in beiden Richtungen bis zum Erhalt der vorgegebenen Grenzbitfehlerraten zu verstellen. Die Vorgänge werden wiederholt bis das Optimum erreicht ist.

Eine weitere Möglichkeit besteht darin, den Abtastzeitpunkt zunächst in einer Richtung und dann in der anderen Richtung - ggf. mehrfach zu verschieben (wenn dies aufgrund des Augendiagrammes möglich ist) und nach jeder Verschiebung die zweite Entscheiderschwelle bis zu der Grenzfehlerrate in beiden Richtungen zu verschieben, um dann einen optimalen Abtastzeitpunkt Tₒ und eine optimale Abtastschwelle zu ermitteln, d. h. das Minimum der Bitfehlerrate aufzuspüren.

Auch diese Verschiebungen von Abtastzeitpunkt und Enscheiderschwelle können auf einen Maximalwerte begrenzt werden und nur innerhalb gewisser Bereiche BE beim Abtastzeitpunkt und BA bei der Entscheidergsschwelle erfolgen, um den Taktregenerator arbeitsfähig zu erhalten. Die versuchsweise Verschiebung der zweiten Entscheiderschwelle erfolgt dagegen stets bis zur Grenzbitfehlerratenkurve.

Die Korrektur von Abtastzeitpunkt und Entscheiderschwelle kann fortlaufend durchgeführt werden. Die Größe der versuchsweisen Änderungen kann variiert werden. So können zunächst, beispielsweise bei einer neuen Datenverbindung, zunächst eine größere Verstellungen des Abtastzeitpunktes erfolgen. Auch kann die Grenzfehlerrate für die Verstellung der Entscheiderschwelle vergrößert werden. Hierdurch soll sichergestellt werden, daß das absolute Minimum sicher erreicht wird. Im eingeschwungenen Zustand kann die Verstellung des Abtastzeitpunktes kleiner ausfallen und kleinere Grenzfehlerraten vorgesehenwerden, um eine genauere Einstellung zu erreichen. Die Verstellung von Entscheiderschwelle und Abtasttakt kann alternierend erfolgen.

## Patentansprüche

1. Verfahren zur Einstellung von Entscheiderschwelle (ES) und Abtastzeitpunkt (T_{A}) eines Datenregenerators mit mehreren Datenpfaden, denen ein Datensignal (DS1) zugeführt wird und die jeweils eine Entscheiderstufe (ES1, ES2) mit einer einstellbaren Entscheiderschwelle und eine Vergleichsschaltung (EXOR) zum Vergleichen der Ausgangsdaten der Datenpfade aufweisen, bei dem in einem ersten Datenpfad das Datensignal (DS2) wiedergewonnen wird und durch eine Phasenregelung ein Abtasttaktsignals (TS) erzeugt wird,
**dadurch gekennzeichnet,**
**daß** das Datensignal (DS) außerdem nur einer zweiten Entscheiderstufe (ES2) eines zweiten Datenpfades (ES2, K21, K22, K23) zugeführt wird und die Ausgangsdaten (DS1) des ersten und die Ausgangsdaten (DS2) des zweiten Datenpfades miteinander verglichen werden,
**daß** im zweiten Datenpfad die Entscheiderschwelle vergrößert und verringert wird bis jeweils bei Grenzschwellenwerten dieselbe vorgegebene Grenzbitfehlerrate (SK) auftritt,
**daß** als neue Entscheiderschwellen (Eₛ) in beiden Datenpfaden der Mittelwert aus den gemessenen Grenzschwellenwerten eingestellt wird,
**daß** versuchsweise der Abtastzeitpunkt (T_{A}) in beiden Datenpfaden in einer Richtung um einen vorgegebenen Betrag verschoben wird und
**daß** dann erneut die Entscheiderschwelle (Eₛ) des zweiten Datenpfades vergrößert und verkleinert wird, bis erneut die Grenzbitfehlerraten auftritt,
**daß** überprüft wird, ob die Differenz zwischen der oberen der unteren Entscheiderschwelle größer oder kleiner als vor der vorhergehenden versuchsweisen Änderung des Abtastzeitpunktes ist und
a) wenn die Differenz größer ist, der neue Abtastzeitpunkt (T_{A}) eingestellt wird und gegebenenfalls eine neu ermittelte Entscheiderschwelle eingestellt wird.
b) wenn die Differenz kleiner ist, eine versuchsweise Änderung des Abtastzeitpunktes (T_{A}) in der entgegengesetzten Richtung erfolgt.

2. Verfahren nach Anspruch 1,
**dadurch gekennzeichnet,**
**daß** versuchsweise der Abtastzeitpunkt (T_{A}) zunächst in eine Richtung um einen festen Betrag verschoben wird,
**daß** im zweiten Datenpfad die Entscheiderschwelle vergrößert und verringert wird bis jeweils dieselbe vorgegebene Grenzbitfehlerrate auftritt,
**daß** anschließend der Abtastzeitpunkt um denselben Betrag in der anderen Richtung vorschoben wird,
**daß** dann erneut die Entscheiderschwelle (Eₛ) des zweiten Datenpfades vergrößert und verkleinert wird, bis erneut die Grenzbitfehlerraten auftreten,
**daß** mit Hilfe der so gewonnenen Entscheiderschwellen durch Interpolation der optimale Abtastzeitpunkt ermittelt und eingestellt wird.

3. Verfahren nach Anspruch 2,
**dadurch gekennzeichnet,**
**daß** die Verschiebung des Abtastzeitpunktes (T_{A}) jeweils nur um einen vorgegebenen Korrekturschritt erfolgt.

4. Verfahren nach Anspruch 3,
**dadurch gekennzeichnet,**
**daß** die Verschiebung der Entscheiderschwelle (Eₛ) jeweils nur um einen vorgegebenen Korrekturwert erfolgt.

5. Verfahren nach Anspruch 4,
**dadurch gekennzeichnet,**
**daß** die versuchsweise Änderung der Entscheiderschwelle (Eₛ) mehrmals nacheinander durchgeführt wird, wenn der neu ermittelte Mittelwert größer als ein Korrekturschritt ist.

6. Verfahren nach einem der vorhergehenden Ansprüche,
**dadurch gekennzeichnet,**
**daß** Korrekturen des Abtastzeitpunktes und der Entscheiderschwelle abwechselnd erfolgen.

7. Verfahren nach einem der vorhergehenden Ansprüche,
**dadurch gekennzeichnet,**
**daß** die Grenzbitfehlerrate oder die Größe der versuchsweisen Verstellung des Abtastzeitpunktes während eines Einstellprozesses geändert wird.

8. Anordnung zur Regelung der Entscheiderschwelle und des Abtastzeitpunktes eines Datenregenerators mit einem ersten Datenpfad mit einer ersten Entscheiderstufe (ES1), mit mindestens einem zweiten Datenpfad, der eine zweiten Entscheiderstufe (ES2) aufweist, und mit einer Vergleichsschaltung (EXOR) zum Vergleichen der Ausgangsdaten der Datenpfade sowie mit einem Phasenregelkreis zur Erzeugung eines Abtasttaktsignals (TS) und mit einer Steuerung (ST) zum Einstellen der Entscheiderschwelle (Eₛ) der Entscheiderstufen (ES1, ES2) und des Abtastzeitpunktes (T_{A}),
**dadurch gekennzeichnet,**
**daß** nur ein zweiter Datenpfad mit einer zweiten Entscheiderstufe (ES2) vorgesehen ist, deren Entscheiderschwelle unabhängig einstellbar ist,
und **daß** die Steuerung (ST) vorsätzlich den Abtastzeitpunkt (T_{A}) und die Entscheiderschwelle (E_{S}) verstellt, um aus der dann gemessenen Grenzbitfehlerrate den optimalen
Abtastzeitpunkt (T_{A}) und die optimale Entscheiderschwelle (E_{S}) zu ermitteln.

9. Anordnung nach Anspruch 8,
**dadurch gekennzeichnet,**
**daß** als Mittel zum Verstellen der Abtastphase ein Summierer oder Subtrahierer vorgesehen ist, dessen Ausgangsspannung einen Oszillator (VCO) steuert.

## Claims

1. Method for setting a decision threshold (ES) and sampling time (T_{A}) for a data regenerator having two or more data paths, to which a data signal (DS1) is supplied and which each have a decision stage (ES1, ES2) with a variable decision threshold, and a comparison circuit (EXOR) for comparison of the output data on the data paths, in which the data signal (DS2) is recovered in a first data path and a sampling clock signal (TS) is produced by phase control,
**characterized**
**in that** data signal (DS) is also supplied only to a second decision state (ES2) in a second data path (ES2, K21, K22, K23), and the output data (DS1) on the first data path and the output data (DS2) on the second data path are compared with one another,
**in that** the decision threshold in the second data path is increased or reduced until the same predetermined limit bit error rate (SK) occur at each of the limit threshold values,
**in that** the mean value of the measured limit threshold values is set as new decision thresholds (Eₛ) in both data paths,
**in that** the sampling time (T_{A}) in both data paths is shifted on a trial and error basis by a predetermined amount in one direction and,
**in that** the decision threshold (Eₛ) in the second data path is then once again increased or reduced until the limit bit error rates occur once again,
**in that** a check is carried out to determine whether the difference between the upper and the lower decision threshold is greater than or less than before the previous change which is made on a trial and error basis to the sampling times, and
a) if the difference is greater, the new sampling time (T_{A}) is set and, if appropriate, a newly determined decision threshold is set.
b) if the difference is less, the sampling time (T_{A}) is changed on a trial and error basis in the opposite direction.

2. Method according to Claim 1,
**characterized**
**in that** the sampling time (T_{A}) is first of all shifted on a trial and error basis by a fixed amount in one direction,
**in that** the decision threshold in the second data path is increased or reduced until the same predetermined limit bit error rate occurs in each case,
**in that** the sampling time is then shifted by the same amount in the other direction,
**in that** the decision threshold (Eₛ) in the second data path is then once again increased and reduced until the limit bit error rates occur once again, and
**in that** the optimum sampling time is determined and set by interpolation using the decision thresholds obtained in this way.

3. Method according to Claim 2,
**characterized**
**in that** the sampling time (T_{A}) is in each case shifted by only one predetermined correction step.

4. Method according to Claim 3,
**characterized**
**in that** the decision threshold (Eₛ) is in each case shifted by only one predetermined correction value.

5. Method according to Claim 4,
**characterized**
**in that** the change to the decision threshold (Eₛ) is carried out two or more times successively on a trial and error basis if the newly determined mean value is greater than one correction step.

6. Method according to one of the preceding claims,
**characterized**
**in that** corrections to the sampling time and to the decision threshold are carried out alternately.

7. Method according to one of the preceding claims,
**characterized**
**in that** the limit bit error rate or the magnitude of the adjustment of the sampling time which is carried out on a trial and error basis is carried out during an adjustment process.

8. Arrangement for controlling the decision threshold and the sampling time of a data regenerator with a first data path having a first decision stage (ES1), with at least one second data path which has a second decision stage (ES2), and with a comparison circuit (EXOR) for comparison of the output data on the data paths, and having a phase locked loop for producing a sampling clock signal (TS), and having a controller (ST) for setting the decision threshold (Eₛ) of the decision stages (ES1, ES2) and of the sampling time (T_{A}), **characterized in that** only one second data path is provided with a second decision stage (ES2), whose decision threshold can be varied independently,
and **in that** the controller (ST) sets the sampling time (T_{A}) and the decision threshold (Eₛ) provisionally, in order to determine the optimum sampling time (T_{A}) and the optimum decision threshold (Eₛ) from the limit bit error rate that is then measured.

9. Arrangement according to Claim 8,
**characterized**
**in that** an adder or substractor whose output voltage controls an oscillator (VCO) is provided as the means for adjusting the sampling phase.

## Revendications

1. Procédé de réglage du seuil de décision (ES) et de l'instant d'échantillonnage (T_{A}) d'un régénérateur de données qui présente plusieurs parcours de données auxquels un signal de données (DS1) est amené et qui présentent chacun un étage de décision (ES1, ES2) doté d'un seuil de décision réglable, et un circuit comparateur (EXOR) pour comparer les données de sortie des parcours de données, dans lequel, dans un premier parcours de données, le signal de données (DS2) est récupéré et un signal de cadence d'échantillonnage (TS) est créé par une régulation de phase,
**caractérisé en ce que**
le signal de données (DS) est de plus amené uniquement à un deuxième étage de décision (ES2) d'un deuxième parcours de données (ES2, K21, K22, K23), les données de sortie (DS1) du premier parcours de données et les données de sortie (DS2) du deuxième parcours de données étant comparées les unes aux autres,
**en ce que** dans le deuxième parcours de données, le seuil de décision est relevé et abaissé jusqu'à ce que pour des valeurs limites de ces seuils, on obtienne un taux limite d'erreur sur les bits (SK) prédéterminé,
**en ce que** comme nouveau seuil de décision (Eₛ) dans les deux parcours de données, on règle la valeur moyenne des deux valeurs limites de seuil mesurées,
**en ce que** l'instant d'échantillonnage (T_{A}) est déplacé de manière itérative dans une direction et d'une valeur prédéterminée dans les deux parcours de données,
**en ce que** de nouveau, le seuil de décision (Eₛ) du deuxième parcours de données est relevé et abaissé jusqu'à ce que l'on obtienne de nouveau le taux limite d'erreur sur les bits,
**en ce que** l'on vérifie si la différence entre le seuil supérieur et le seuil inférieur de décision est supérieure ou inférieure à ce qu'elle était avant la modification itérative réalisée auparavant de l'instant d'échantillonnage et
a) si la différence est supérieure, le nouvel instant d'échantillonnage (T_{A}) est réglé et un nouveau seuil de décision calculé est éventuellement réglé,
b) si la différence est plus petite, on effectue une modification itérative de l'instant d'échantillonnage (T_{A}) dans le sens inverse.

2. Procédé selon la revendication 1, **caractérisé en ce que** l'instant d'échantillonnage (T_{A}) est déplacé itérativement d'abord dans une direction et d'une valeur fixe,
**en ce que** dans le deuxième parcours de données, le seuil de décision est relevé et abaissé jusqu'à ce que l'on obtienne chaque fois le même taux limite prédéterminé d'erreur sur les bits,
**en ce qu'**ensuite, l'instant d'échantillonnage est déplacé de la même valeur dans l'autre direction,
**en ce qu'**ensuite, le seuil de décision (Eₛ) du deuxième parcours de données est de nouveau relevé et abaissé jusqu'à ce que l'on obtienne de nouveau les mêmes taux limites d'erreur sur les bits et
**en ce qu'**à l'aide des seuils de décision ainsi obtenus, on détermine par interpolation l'instant d'échantillonnage optimal et on le règle.

3. Procédé selon la revendication 2, **caractérisé en ce que** le déplacement de l'instant d'échantillonnage (T_{A}) s'effectue chaque fois par pas de correction prédéterminé.

4. Procédé selon la revendication 3, **caractérisé en ce que** le déplacement du seuil de décision (Eₛ) s'effectue chaque fois sur une valeur de correction prédéterminée.

5. Procédé selon la revendication 4, **caractérisé en ce que** la modification itérative du seuil de décision (Eₛ) est exécutée plusieurs fois successivement lorsque la nouvelle valeur moyenne déterminée est plus grande qu'un pas de correction.

6. Procédé selon l'une des revendications précédentes, **caractérisé en ce que** des corrections sur l'instant d'échantillonnage et sur le seuil de décision sont effectuées en alternance.

7. Procédé selon l'une des revendications précédentes, **caractérisé en ce que** le taux limite d'erreur sur les bits ou l'ampleur du déplacement itératif de l'instant d'échantillonnage sont modifiés pendant une opération de réglage.

8. Agencement de régulation du seuil de décision et de l'instant d'échantillonnage d'un régénérateur de données qui présente un premier parcours de données avec un premier étage de décision (ES1), au moins un deuxième parcours de données qui présente un deuxième étage de décision (ES2) et un circuit comparateur (EXOR) pour comparer les données de sortie du parcours de données ainsi qu'une boucle de régulation de phase pour la création d'un signal de cadence d'échantillonnage (TS) et qu'une commande (ST) pour régler le seuil de décision (Eₛ) des étages de décision (ES1, ES2) et de l'instant d'échantillonnage (T_{A}),
**caractérisé en ce que**
seul un deuxième parcours de données avec un deuxième étage de décision (ES2) est prévu, son seuil de décision pouvant être réglé indépendamment et
**en ce que** la commande (ST) déplace préalablement l'instant d'échantillonnage (TA) et le seuil de décision (Eₛ) pour ensuite déterminer l'instant optimal d'échantillonnage (T_{A}) et le seuil optimal de décision (Eₛ) à partir du taux limite d'erreur sur les bits mesuré à ce moment.

9. Agencement selon la revendication 8, **caractérisé en ce qu'**on prévoit comme moyen pour déplacer la phase d' un additionneur ou un soustracteur dont la tension de sortie commande un oscillateur (VCO).
